# EUROPEAN PATENT APPLICATION

(11) **EP 4 672 155 A1**
(43) Date of publication of application: **31.12.2025**
(21) Application number: 23930022.1
(22) Date of filing: 30.11.2023
(51) Int. Cl.: G06T 15/00

(54) **CLOUD RENDERING METHOD, APPARATUS, AND COMPUTING DEVICE CLUSTER**

(30) Priority: 24.03.2023 CN 202310308673
(71) Applicant: Huawei Cloud Computing Technologies Co., Ltd., Guiyang, Guizhou 550025 (CN)
(72) Inventor: CHEN, Pu, Guiyang, Guizhou 550025 (CN)
(74) Representative: Gill Jennings & Every LLP
(86) International application number: PCT/CN2023/135517
(87) International publication number: WO 2024/198456

(57) **Abstract**

A cloud rendering method includes: A cloud rendering application client obtains a rendering instruction delivered by a user of the cloud rendering application client. The cloud rendering application client sends a first message to a cloud rendering node, where the first message includes a rendering task, the first message indicates the cloud rendering node to execute the rendering task by using a cloud rendering application and at least one postprocessing program, and the postprocessing program is used to provide an image processing capability that cannot be provided by the cloud rendering application. The cloud rendering application client obtains a second message sent by the cloud rendering node, where the second message includes a rendered image obtained by the cloud rendering node by executing the rendering task. The cloud rendering application client displays the rendered image in response to the second message. In this way, in the cloud rendering process, the cloud rendering application may be first used for rendering, and then the postprocessing program that is used to provide the image processing capability that cannot be provided by the cloud rendering application is used to process the image rendered by the cloud rendering application, thereby improving rendering effect.

## Description

This application claims priority to Chinese Patent Application No. 202310308673.2, filed with the China National Intellectual Property Administration on March 24, 2023 and entitled "CLOUD RENDERING METHOD AND APPARATUS, AND COMPUTING DEVICE CLUSTER", which is incorporated herein by reference in its entirety.

### TECHNICAL FIELD

This application relates to the field of information technologies (information technology, IT), and in particular, to a cloud rendering method and apparatus, and a computing device cluster.

### BACKGROUND

Currently, using cloud rendering resources to render interfaces of a client has become a trend. Cloud rendering means that, in a running process of the client, an interface displayed on the client is rendered by using the cloud rendering resources based on an operation of a user on the client.

In a related technology, after receiving a rendering requirement sent by the client, a cloud rendering management platform may allocate, to the client on the cloud rendering resources based on the rendering requirement of the client, a rendering node that executes a rendering task of the client, so that the rendering node can render the interface displayed on the client, and send a rendered image to the client. However, currently, the image obtained through cloud rendering has poor effect. Therefore, how to improve effect of the image obtained through cloud rendering is a technical problem that needs to be urgently resolved currently.

### SUMMARY

This application provides a cloud rendering method and apparatus, a computing device cluster, a computer storage medium, and a computer product, to improve effect of an image obtained through cloud rendering.

According to a first aspect, this application provides a cloud rendering method, including: A cloud rendering application client obtains a rendering instruction delivered by a user of the cloud rendering application client. The cloud rendering application client sends a first message to a cloud rendering node in response to the rendering instruction, where the first message includes a rendering task, the first message indicates the cloud rendering node to execute the rendering task by using a cloud rendering application and at least one postprocessing program, and the postprocessing program is used to provide an image processing capability that cannot be provided by the cloud rendering application. The cloud rendering application client obtains a second message sent by the cloud rendering node, where the second message includes a rendered image obtained by the cloud rendering node by executing the rendering task. The cloud rendering application client displays the rendered image in response to the second message. In this way, in a cloud rendering process, the cloud rendering application may be first used for rendering, and then the postprocessing program that is used to provide the image processing capability that cannot be provided by the cloud rendering application is used to process the image rendered by the cloud rendering application, thereby improving rendering effect.

In a possible implementation, the rendering instruction delivered by the user may include the at least one postprocessing program selected by the user on the cloud rendering application client.

In a possible implementation, when there are a plurality of postprocessing programs, the rendering instruction delivered by the user further includes a use sequence of the plurality of postprocessing programs that is set by the user.

In a possible implementation, before the obtaining, by the cloud rendering application client, the rendering instruction delivered by the user of the cloud rendering application client, the method further includes: The cloud rendering application client displays basic information of the postprocessing program, where the basic information includes at least one of use effect, configuration requirement, application scope, and use price. In this way, the user can choose whether to use the postprocessing program based on a requirement. In a possible implementation, the postprocessing program is a program preselected by an administrator of the cloud rendering application.

In a possible implementation, the postprocessing program is uploaded by a provider of the postprocessing program to a cloud storage node allocated by a cloud rendering management platform. The cloud rendering management platform is at least configured to configure program information of the postprocessing program, and notify the cloud rendering node to obtain the postprocessing program from the cloud storage node. The program information includes at least one of application scope, charging manner, and version information. In this way, when executing the cloud rendering task, the cloud rendering node may obtain the postprocessing program by using the cloud rendering management platform.

In a possible implementation, the program information may be configured by the provider of the postprocessing program on a display interface provided by the cloud rendering management platform.

In a possible implementation, the rendered image is obtained by the cloud rendering node by first executing the rendering task by using the cloud rendering application, and then processing, by using the postprocessing program, an execution result output by the cloud rendering application.

According to a second aspect, this application provides a postprocessing program configuration method, including: A cloud rendering management platform displays at least one postprocessing program, where the postprocessing program is used to provide an image processing capability that cannot be provided by a cloud rendering application. In response to a management operation of a provider of the postprocessing program on a target postprocessing program, the cloud rendering management platform displays a configuration interface of the target postprocessing program. The cloud rendering management platform updates program information of the target postprocessing program in response to a configuration operation of the provider on the configuration interface, where the program information includes at least one of application scope, charging manner, and version information. For example, an installation package of the postprocessing program can be stored on a cloud storage node allocated by the cloud rendering management platform. In this way, configuration of the postprocessing program can be completed by using the cloud rendering management platform, thereby improving convenience of program configuration.

In a possible implementation, the method further includes: The cloud rendering management platform displays basic information of the target postprocessing program in response to a view operation of the provider of the postprocessing program on the target postprocessing program, where the basic information includes at least one of use effect, configuration requirement, application scope, and use price. In this way, the provider of the postprocessing program can easily learn the basic information of the postprocessing program, and then determine whether to change a configuration of the postprocessing program.

In a possible implementation, the method further includes: obtaining an identifier that is of the at least one postprocessing program and that is set for the cloud rendering application; and sending the identifier to a cloud rendering node on which the cloud rendering application is deployed, so that the cloud rendering node obtains, from a cloud storage node, the postprocessing program corresponding to the identifier, and deploys the postprocessing program corresponding to the identifier on the cloud rendering node. In this way, when executing a rendering task, the cloud rendering node may perform a postprocessing operation by using the postprocessing program, thereby improving rendering effect.

According to a third aspect, this application provides a cloud rendering method, including: A cloud rendering node obtains a first message sent by a cloud rendering application client, where the first message includes a rendering task. In response to the first message, the cloud rendering node executes the rendering task by using a cloud rendering application, to obtain a first rendered image. The cloud rendering node processes the first rendered image by using at least one postprocessing program, to obtain a second rendered image, where the postprocessing program is used to provide an image processing capability that cannot be provided by the cloud rendering application. The cloud rendering node sends a second message to the cloud rendering application client, where the second message includes the second rendered image.

In this way, after rendering is performed by using the cloud rendering application, the postprocessing program that is used to provide the image processing capability that cannot be provided by the cloud rendering application may be used to process the image rendered by the cloud rendering application, thereby improving rendering effect.

In a possible implementation, before the cloud rendering node processes the first rendered image by using the at least one postprocessing program, the method further includes: The cloud rendering node obtains a third message sent by a cloud rendering management platform, and the third message includes an identifier of the at least one postprocessing program; and the cloud rendering node obtains the at least one postprocessing program from a cloud storage node in response to the third message. In this way, the cloud rendering node may complete deployment of the postprocessing program, and may further perform processing by using the postprocessing program.

In a possible implementation, that the cloud rendering node processes the first rendered image by using the at least one postprocessing program specifically includes: When there are a plurality of postprocessing programs, the cloud rendering node processes the first rendered image in sequence based on a use sequence of the plurality of postprocessing programs, where the use sequence of the plurality of postprocessing programs is set by an administrator of the cloud rendering application or a user of the cloud rendering application client. In this way, an error in service processing is avoided, and processing efficiency is improved.

In a possible implementation, the at least one postprocessing program is a program selected by the user of the cloud rendering application client on the cloud rendering application client, or the at least one postprocessing program is a program preselected by the administrator of the cloud rendering application.

According to a fourth aspect, this application provides a cloud rendering apparatus, deployed on a cloud rendering node, including: a communication module, configured to obtain a first message sent by a cloud rendering application client, where the first message includes a rendering task; and a processing module, configured to execute, in response to the first message, the rendering task by using a cloud rendering application, to obtain a first rendered image. The processing module is further configured to process the first rendered image by using at least one postprocessing program, to obtain a second rendered image. The communication module is further configured to send a second message to the cloud rendering application client, where the second message includes the second rendered image.

In a possible implementation, before the processing module processes the first rendered image by using the at least one postprocessing program, the communication module is further configured to: obtain a third message sent by a cloud rendering management platform, and the third message includes an identifier of the at least one postprocessing program; and obtain the at least one postprocessing program from a cloud storage node in response to the third message.

In a possible implementation, when processing the first rendered image by using the at least one postprocessing program, the processing module is specifically configured to: when there are a plurality of postprocessing programs, process the first rendered image in sequence based on a use sequence of the plurality of postprocessing programs, where the use sequence of the plurality of postprocessing programs is set by an administrator of the cloud rendering application or a user of the cloud rendering application client.

In a possible implementation, the at least one postprocessing program is a program selected by the user of the cloud rendering application client on the cloud rendering application client, or the at least one postprocessing program is a program preselected by the administrator of the cloud rendering application.

According to a fifth aspect, this application provides a cloud rendering apparatus, deployed on a cloud rendering application client, including: an obtaining module, configured to obtain a rendering instruction delivered by a user of the cloud rendering application client; the obtaining module is further configured to send a first message to a cloud rendering node in response to the rendering instruction, where the first message includes a rendering task, the first message indicates the cloud rendering node to execute the rendering task by using a cloud rendering application and at least one postprocessing program, and the postprocessing program may be used to provide an image processing capability that cannot be provided by the cloud rendering application; and the obtaining module is further configured to obtain a second message sent by the cloud rendering node, where the second message includes a rendered image obtained by the cloud rendering node by executing the rendering task; and a display module, configured to display the rendered image in response to the second message.

In a possible implementation, the rendering instruction delivered by the user includes the at least one postprocessing program selected by the user on the cloud rendering application client.

In a possible implementation, when there are a plurality of postprocessing programs, the rendering instruction delivered by the user further includes a use sequence of the plurality of postprocessing programs that is set by the user.

In a possible implementation, before the obtaining module obtains the rendering instruction delivered by the user of the cloud rendering application client, the display module is further configured to: display, basic information of the postprocessing program, where the basic information includes at least one of use effect, configuration requirement, application scope, and use price.

In a possible implementation, the postprocessing program is a program preselected by an administrator of the cloud rendering application.

In some embodiments, the postprocessing program is uploaded by a provider of the postprocessing program to a cloud storage node allocated by a cloud rendering management platform. The cloud rendering management platform is at least configured to configure program information of the postprocessing program, and notify the cloud rendering node to obtain the postprocessing program from the cloud storage node. The program information includes at least one of application scope, charging manner, and version information.

In a possible implementation, the program information may be configured by the provider of the postprocessing program on a display interface provided by the cloud rendering management platform.

In some embodiments, the rendered image is obtained by the cloud rendering node by first executing the rendering task by using the cloud rendering application, and then processing, by using the postprocessing program, an execution result output by the cloud rendering application.

According to a sixth aspect, this application provides a computing device cluster, including at least one computing device, and each computing device includes a processor and a memory. The processor of the at least one computing device is configured to execute instructions stored in the memory of the at least one computing device, the computing device cluster is enabled to perform the method described in any one of the first aspect or the possible implementations of the first aspect; or perform the method described in any one of the second aspect or the possible implementations of the second aspect, or perform the method described in any one of the third aspect or the possible implementations of the third aspect.

According to a seventh aspect, this application provides a computer-readable storage medium, including computer instructions. When the computer program instructions are executed by a computing device, the computing device performs the method described in any one of the first aspect or the possible implementations of the first aspect, or performs the method described in any one of the second aspect or the possible implementations of the second aspect. Alternatively, when the computer program instructions are executed by a computing device cluster, the computing device cluster performs the method described in any one of the first aspect or the possible implementations of the first aspect, or performs the method described in any one of the second aspect or the possible implementations of the second aspect, or performs the method described in any one of the third aspect or the possible implementations of the third aspect.

According to an eighth aspect, this application provides a computer program product including instructions. When the instructions are run by a computing device, the computing device is enabled to perform the method described in any one of the first aspect or the possible implementations of the first aspect, or perform the method described in any one of the second aspect or the possible implementations of the second aspect. Alternatively, when the instructions are run by a computing device cluster, the computing device cluster is enabled to perform the method described in any one of the first aspect or the possible implementations of the first aspect, or perform the method described in any one of the second aspect or the possible implementations of the second aspect, or perform the method described in any one of the third aspect or the possible implementations of the third aspect.

It may be understood that, for beneficial effect of the fourth aspect to the eighth aspect, refer to related descriptions of the first aspect, the second aspect, or the third aspect. Details are not described herein again.

### BRIEF DESCRIPTION OF DRAWINGS

The following briefly describes the accompanying drawings used in descriptions of embodiments or the conventional technology.
FIG. 1 is a diagram of a form of interaction between an administrator of a cloud rendering application and a cloud rendering management platform according to an embodiment of this application;
FIG. 2 is a schematic flowchart of a cloud rendering method according to an embodiment of this application;
FIG. 3 is a diagram of a process of uploading a postprocessing program to a cloud rendering management platform according to an embodiment of this application;
FIG. 4 is a diagram of interface display of a cloud rendering application client according to an embodiment of this application;
FIG. 5 is a diagram of a structure of a cloud rendering apparatus according to an embodiment of this application;
FIG. 6 is a diagram of a structure of another cloud rendering apparatus according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of a structure of another computing device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the term "example", "for example", or the like is intended to present a related concept in a specific manner.

In the descriptions of embodiments of this application, unless otherwise specified, "a plurality of' means two or more. For example, a plurality of processing units are two or more processing units, and a plurality of elements are two or more elements.

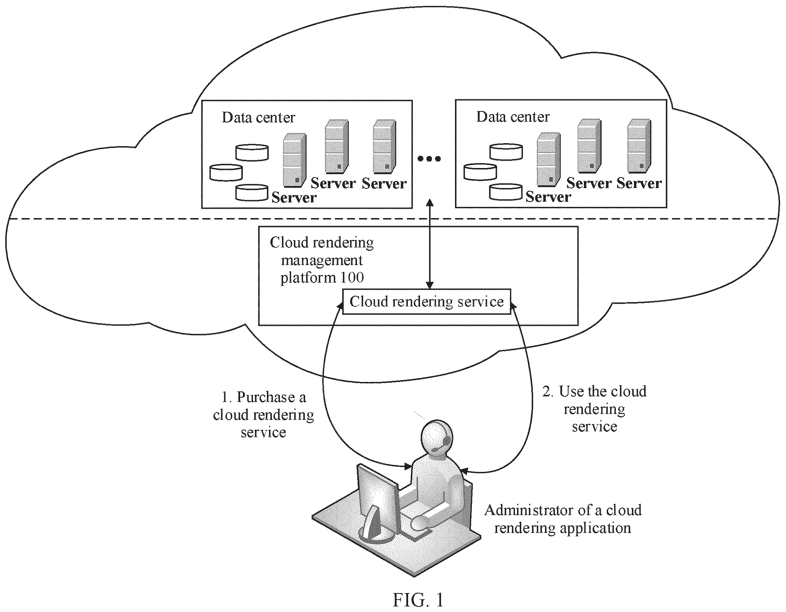

For example, FIG. 1 is a diagram of a form of interaction between an administrator of a cloud rendering application and a cloud rendering management platform according to an embodiment of this application. As shown in FIG. 1, a form of interaction between an administrator of a cloud rendering application and a cloud rendering management platform 100 mainly includes: The administrator of the cloud rendering application logs in to the cloud rendering management platform 100 by using a client web page, and selects purchases a cloud service of a cloud rendering service from the cloud rendering management platform 100. After the purchase, the administrator of the cloud rendering application may manage the cloud rendering application based on a function provided by the cloud rendering service, and the like. The cloud rendering management platform 100 is mainly used to manage an infrastructure for running the cloud rendering service. For example, the infrastructure for running the cloud rendering service may include one or more data centers that are disposed in a same region or different regions, and each data center may include one or more servers. The data center can provide a basic resource for the cloud rendering service, for example, a computing resource and a storage resource. Therefore, when purchasing and using the cloud rendering service, the administrator of the cloud rendering application mainly pays for a resource to be used. When using the cloud rendering service, the administrator of the cloud rendering application inputs a command via a configuration interface provided by the cloud rendering management platform 100, an application programming interface (application programming interface, API), an interface for interacting with the administrator of the cloud rendering application, or the like. The cloud rendering management platform 100 may execute the command input by the administrator of the cloud rendering application, for example, upload an installation package of the cloud rendering application, or deploy the cloud rendering application.

The administrator of the cloud rendering application may deploy the cloud rendering application in advance by using the cloud rendering management platform 100. In this case, the administrator of the cloud rendering application may upload the installation package of the cloud rendering application on the configuration interface provided by the cloud rendering management platform 100, and deliver a deployment instruction. After obtaining the deployment instruction, the cloud rendering management platform 100 may allocate a cloud rendering node (namely, a node used to perform cloud rendering) to the cloud rendering application. This process may also be understood as allocating a computing resource, a storage resource, and the like to the cloud rendering application, and installing the cloud rendering application on the cloud rendering node allocated to the cloud rendering application. For example, the cloud rendering node may be a physical machine, a virtual machine, a container, or the like. Then, when a user of the cloud rendering application uses the cloud rendering service by using a cloud rendering client, after obtaining a rendering task sent by the cloud rendering client, the cloud rendering management platform 100 may send the rendering task to the cloud rendering node, so that the cloud rendering node completes the rendering task. Certainly, the cloud rendering client may alternatively directly deliver the rendering task to the cloud rendering node. This is not limited herein.

In addition, the administrator of the cloud rendering application may not deploy the cloud rendering application in advance by using the cloud rendering management platform 100. In this case, when the user of the cloud rendering application uses the cloud rendering service on the cloud rendering client, the cloud rendering management platform 100 may deploy the cloud rendering application in real time. The administrator of the cloud rendering application may upload the installation package of the cloud rendering application to the cloud rendering management platform 100 in advance on the configuration interface provided by the cloud rendering management platform 100. Then, the cloud rendering management platform 100 may store the installation package of the cloud rendering application to a cloud storage node configured to store data. Subsequently, when the user of the cloud rendering application uses the cloud rendering service on the cloud rendering client, after obtaining the rendering task sent by the cloud rendering client, the cloud rendering management platform 100 may allocate the cloud rendering node for the rendering task, obtain, from the cloud storage node, the installation package of the cloud rendering application related to the rendering task, install the cloud rendering application on the cloud rendering node allocated by the cloud rendering management platform 100, and finally, deliver the rendering task to the cloud rendering node, so that the cloud rendering node completes the rendering task.

Generally, when executing the rendering task, the cloud rendering node can execute the task by using only a function provided by the cloud rendering application, and cannot use a function not provided by the cloud rendering application. Therefore, when the user needs to use some functions that are not provided by the cloud rendering application, it is difficult to obtain rendering effect required by the user.

In view of this, an embodiment of this application provides a cloud rendering method. In the cloud rendering method, a program (which may also be referred to as a "postprocessing program") that performs some operations after rendering is completed may be added, and postprocessing is performed on a rendered image by using the added postprocessing program, to improve rendering effect.

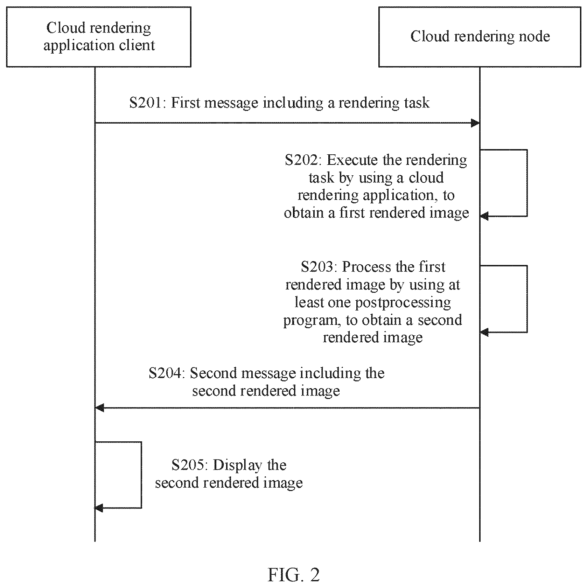

For example, FIG. 2 is a schematic flowchart of a cloud rendering method according to an embodiment of this application. As shown in FIG. 2, the cloud rendering method may include the following steps.

S201: A cloud rendering application client (namely, a client of a cloud rendering application) sends a first message including a rendering task to a cloud rendering node.

In this embodiment, a user may start the cloud rendering application client on a computing device, upload, to the cloud rendering application client through a task uploading entry of the cloud rendering application client, content that needs to be rendered by the cloud rendering application client, and deliver a rendering start instruction, that is, deliver a rendering instruction.

When a cloud rendering management platform has allocated the cloud rendering node to the cloud rendering application corresponding to the cloud rendering application client, and the cloud rendering application is deployed on the cloud rendering node, after obtaining the instruction delivered by the user, the cloud rendering application client may directly send the first message including the rendering task to the cloud rendering node. Certainly, in this case, the cloud rendering application client may alternatively first send the first message including the rendering task to the cloud rendering management platform, and then the cloud rendering management platform forwards the first message to the cloud rendering node. This may be specifically determined based on an actual situation, and is not limited herein.

When the cloud rendering management platform has allocated the cloud rendering node to the cloud rendering application corresponding to the cloud rendering application client, but the cloud rendering application is not deployed on the cloud rendering node, after obtaining the instruction delivered by the user, the cloud rendering application client may first send the first message including the rendering task to the cloud rendering management platform. Then, the cloud rendering management platform may notify the cloud rendering node to obtain the cloud rendering application from a corresponding storage node, and deploy the cloud rendering application. After the cloud rendering node completes deployment of the cloud rendering application, the cloud rendering management platform may forward the first message to the cloud rendering node. Certainly, the cloud rendering management platform may alternatively notify the cloud rendering application client that the cloud rendering application has been deployed on the corresponding cloud rendering node, and then the cloud rendering application client may send the first message to the cloud rendering node.

When the cloud rendering management platform does not allocate the cloud rendering node to the cloud rendering application corresponding to the cloud rendering application client, after obtaining the instruction delivered by the user, the cloud rendering application client may first send the first message including the rendering task to the cloud rendering management platform. Then, the cloud rendering management platform may allocate the cloud rendering node, and notify the cloud rendering node to obtain the cloud rendering application from the corresponding storage node, and deploy the cloud rendering application. After the cloud rendering node completes deployment of the cloud rendering application, the cloud rendering management platform may forward the first message to the cloud rendering node. Certainly, the cloud rendering management platform may alternatively notify the cloud rendering application client that the cloud rendering application has been deployed on the corresponding cloud rendering node, and then the cloud rendering application client may send the first message to the cloud rendering node.

For example, the first message may indicate the cloud rendering node to execute the rendering task by using the cloud rendering application and at least one postprocessing program. The postprocessing program may be used to provide an image processing capability that cannot be provided by the cloud rendering application.

In some embodiments, the rendering instruction delivered by the user may include the at least one postprocessing program selected by the user on the cloud rendering application client, that is, the user may select the postprocessing program required by the user. In addition, when there are a plurality of postprocessing programs, the rendering instruction delivered by the user may further include a use sequence of the plurality of postprocessing programs that is set by the user, that is, the user may select an execution sequence of postprocessing programs required by the user.

S202: In response to the first message, the cloud rendering node executes the rendering task by using the cloud rendering application, to obtain a first rendered image.

In this embodiment, after obtaining the rendering task, the cloud rendering node may start the cloud rendering application on the cloud rendering node, and execute the rendering task by using the cloud rendering application, to obtain the first rendered image.

S203: The cloud rendering node processes the first rendered image by using the at least one postprocessing program, to obtain a second rendered image.

In this embodiment, after obtaining the first rendered image, the cloud rendering node may process the rendered image by using the at least one postprocessing program, to obtain the second rendered image. When there are the plurality of postprocessing programs, the cloud rendering node may process the first rendered image based on a service logic sequence by using these postprocessing programs, or process the first rendered image based on the execution sequence that is of the postprocessing programs and that is set by the user.

For example, if there are two postprocessing programs, namely, a postprocessing program A and a postprocessing program B, the postprocessing program A may be used to improve image resolution, and the postprocessing program B may be used to improve halo effect of an image. When the service logic sequence is first improving resolution and then increasing halo effect, the cloud rendering node may first process the first rendered image by using the postprocessing program A, and then process, by using the postprocessing program B, an image output by the postprocessing program A, to obtain the second rendered image.

In some embodiments, the cloud rendering node may embed the postprocessing program into the cloud rendering application. A specific embedding manner may be injection by using a hook (hook) technology (for example, injection implemented by modifying a registry, or injection implemented in a process injection manner), or may be replacing a system graphics call DLL, for example, replacing d3d12.dll. In this way, after the injection, a call to a DirectX interface by a rendering program may be intercepted, to obtain rendered image data, and even call vertex data, texture data, rendering GBuffer information, and the like. In addition, original data may be further modified. For example, after the rendered image data is obtained, sharpening processing is performed on an original image, so that an image seen by the user is sharpened strongly, or anti-aliasing effect is optimized, and ambient light shielding is optimized.

S204: The cloud rendering node sends a second message including the second rendered image to the cloud rendering application client.

In this embodiment, after obtaining the second image, the cloud rendering node may send the second message including the second rendered image to the cloud rendering application client. The second message may indicate the cloud rendering application client to display the second rendered image.

S205: The cloud rendering application client displays the second rendered image in response to the second message.

In this embodiment, after obtaining the second message, the cloud rendering application client may display the second rendered image.

In this way, rendering is completed in the cloud rendering application, and the rendered image is processed by using the postprocessing program, thereby improving rendering effect.

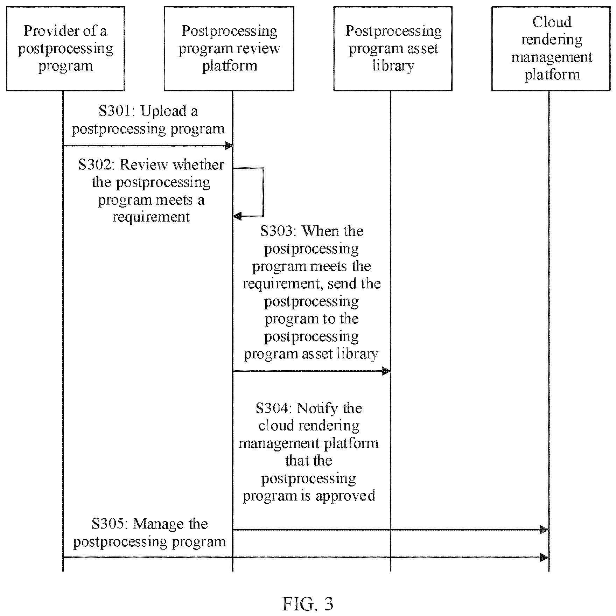

In some embodiments, the postprocessing programs described in S203 in FIG. 2 may be uploaded in advance by providers of the postprocessing programs to a resource allocated by the cloud rendering management platform, so that the cloud rendering node can deploy these postprocessing programs on the cloud rendering node. A specific uploading process is shown in FIG. 3, and may include the following steps.

S301: A provider of a postprocessing program uploads the postprocessing program to a postprocessing program review platform.

In this embodiment, the provider of the postprocessing program may upload the postprocessing program to the postprocessing program review platform on a user interface (user interface, UI) provided by the postprocessing program review platform. For example, an uploading manner of the postprocessing program may be uploading in a hypertext transfer protocol (hypertext transfer protocol, HTTP) manner, and a packaging manner of the uploading may be packaging and uploading according to a standard format released by the postprocessing program. For example, a dynamically linked library (dynamically linked library, DLL) of logic of the postprocessing program is packaged into a compressed package according to a required format. The logic of the postprocessing program may be a DLL, or may be in another manner.

S302: The postprocessing program review platform reviews the postprocessing program.

In this embodiment, the postprocessing program review platform may review the postprocessing program, to determine whether the postprocessing program meets a requirement. For example, a specific program used to review the postprocessing program may be preset in the postprocessing program review platform. The postprocessing program may be automatically loaded by using the specific program, processing effect of the postprocessing program on the rendered image is determined, and whether the postprocessing program meets the requirement is determined based on the processing effect. Certainly, the postprocessing program review platform may also present, to the provider of the postprocessing program, processing effect that is of the postprocessing program and that is determined by the specific program, so that the provider of the postprocessing program determines whether the postprocessing program meets the requirement.

S303: When the postprocessing program meets the requirement, the postprocessing review platform sends the postprocessing program to a postprocessing program asset library.

In this embodiment, when the postprocessing program meets the requirement, the postprocessing review platform sends the postprocessing program to the postprocessing program asset library. The postprocessing program asset library is mainly used to store the postprocessing program. The postprocessing program asset library may be but is not limited to a storage resource allocated by the cloud rendering management platform, for example, a storage node used to store data.

S304: The postprocessing review platform notifies the cloud rendering management platform that the postprocessing program is approved.

In this embodiment, after the postprocessing review platform completes review of the postprocessing program and the postprocessing program is approved, the postprocessing review platform may notify the cloud rendering management platform that the postprocessing program is approved. In this way, the cloud rendering management platform may externally present an approved postprocessing program, so that the provider of the postprocessing program can set the postprocessing program.

S305: The provider of the postprocessing program manages the postprocessing program on the cloud rendering management platform.

In this embodiment, the provider of the postprocessing program may view, on the UI of the cloud rendering management platform, postprocessing programs that are approved. Then, the provider of the postprocessing program may deliver a management operation for a postprocessing program to configure program information of the postprocessing program, for example, set an application scope, a charging manner, and version information of the postprocessing program. After obtaining the management operation, the cloud rendering management platform may display a configuration interface of the corresponding postprocessing program. Then, the provider of the postprocessing program may configure the program information of the postprocessing program on the configuration interface, for example, set the application scope of the postprocessing program to be used only in several cloud rendering applications, and the like, set the charging manner of the postprocessing program to be charged by hour: CNY1/hour, and the like, and mark the version information of the postprocessing program as 1.0, 2.0, or the like.

In addition, the provider of the postprocessing program or another user may further view some basic information of the postprocessing program by using the cloud rendering management platform, for example, use effect, configuration requirement (like memory overhead and video memory overhead), application scope, and use price. After a user delivers an operation of viewing the postprocessing program, the cloud rendering management platform may display the basic information of the postprocessing program.

This completes the upload and setting of the postprocessing program. In addition, the postprocessing program review platform described in FIG. 3 may be integrated on the cloud rendering management platform. For example, the postprocessing program review platform may be a functional module on the cloud rendering management platform. Certainly, the postprocessing program review platform may alternatively be independent of the cloud rendering management platform. This may be specifically determined based on an actual situation, and is not limited herein. After uploading the postprocessing program to the resource allocated by the cloud rendering management platform, the provider of the postprocessing program may perform, by using the postprocessing program, postprocessing on the image rendered by the cloud rendering application, to improve rendering effect.

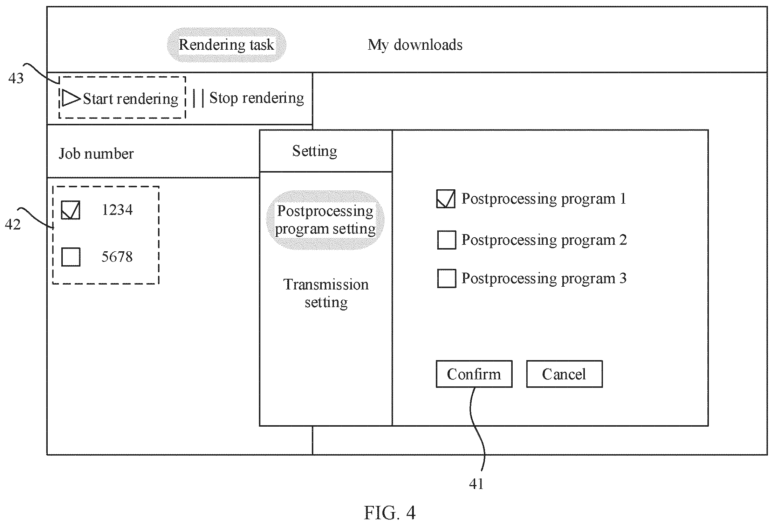

In some embodiments, the postprocessing program described in S203 in FIG. 2 may be selected by the user by using the cloud rendering application client. For example, as shown in FIG. 4, the user may select a "Postprocessing program 1" in a "Postprocessing program setting" interface in the cloud rendering application client, and click a "Confirm" button 41. In this way, the user selects the "Postprocessing program 1" to perform postprocessing on a product that needs to be rendered by the user. For example, before the user selects the postprocessing program, the cloud rendering application client may further display the basic information of the postprocessing program. The basic information may include at least one of use effect, configuration requirement, application scope, and use price. In this way, the user can choose whether to use the postprocessing program based on a requirement. The displaying the basic information of the postprocessing program may be displayed in a form of pop-up window when the user moves a mouse or the like to an identifier of the postprocessing program, or may be directly displaying the basic information of the postprocessing program when the postprocessing program is displayed. This may be specifically determined based on an actual situation, and is not limited herein.

In FIG. 4, after the user completes setting of the postprocessing program, the user may select, in a region 42, content that needs to be rendered (certainly, the content may alternatively be selected in advance, which is not limited herein), for example, content with a job number of "1234", and select a "Start rendering" button in a region 43. In this case, the user delivers an instruction for performing cloud rendering on the content with the job number of "1234" and performing postprocessing on the content by using the "Postprocessing program 1", and then S201 may be performed. In this case, the first message may further include an identifier of the postprocessing program selected by the user. In this way, after obtaining the first message, the cloud rendering node may learn which postprocessing programs to use for postprocessing.

In addition, after the user delivers a rendering start instruction, the cloud rendering application client may first send a rendering request to the cloud rendering management platform. Then, the cloud rendering management platform may notify the cloud rendering node to obtain the postprocessing programs set by the user, for example, send identifiers of these postprocessing programs to the cloud rendering node. After obtaining the message sent by the cloud rendering management platform, the cloud rendering node may obtain the postprocessing program from a corresponding storage node (namely, a postprocessing program asset library), and complete deployment. Then, the cloud rendering node may use these postprocessing programs to perform postprocessing operations.

In addition, when the user selects a plurality of postprocessing programs, the user may set a use sequence of the postprocessing programs based on service processing logic. Certainly, the cloud rendering application client or the cloud rendering management platform may also allocate the use sequence for these postprocessing programs based on the service processing logic. This is not limited herein.

In some embodiments, the post-processing program described in S203 in FIG. 2 may alternatively be preset by an administrator of the cloud rendering application. An operation administrator of the cloud rendering application may log in to the cloud rendering management platform in advance, and set the postprocessing program for the cloud rendering application managed by the operation administrator. In this case, after the user delivers the rendering start instruction, the cloud rendering application client may first send the rendering request to the cloud rendering management platform. Then, the cloud rendering management platform may notify the cloud rendering node to obtain the postprocessing program set by the user. After obtaining the message sent by the cloud rendering management platform, the cloud rendering node may obtain the postprocessing program from the corresponding storage node (namely, the postprocessing program asset library), and complete deployment. In this case, it is equivalent to deploying the postprocessing program on the cloud rendering node in real time. Then, the cloud rendering node may use these postprocessing programs to perform postprocessing operations.

In addition, after the operation administrator of the cloud rendering application completes setting, the cloud rendering management platform may also notify the cloud rendering node to obtain the postprocessing program set by the user. After obtaining the message sent by the cloud rendering management platform, the cloud rendering node may obtain the postprocessing program from the corresponding storage node (namely, the postprocessing program asset library), and complete deployment. In this case, it is equivalent to deploying the postprocessing program on the cloud rendering node in advance. Then, the cloud rendering node may use these postprocessing programs to perform postprocessing operations.

In addition, when there are the plurality of postprocessing programs, the operation administrator may further set the use sequence of the postprocessing programs based on the service processing logic. Certainly, the cloud rendering management platform may also allocate the use sequence for these postprocessing programs based on the service processing logic. This is not limited herein.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein.

Based on the method in the foregoing embodiment, an embodiment of this application further provides a cloud rendering apparatus.

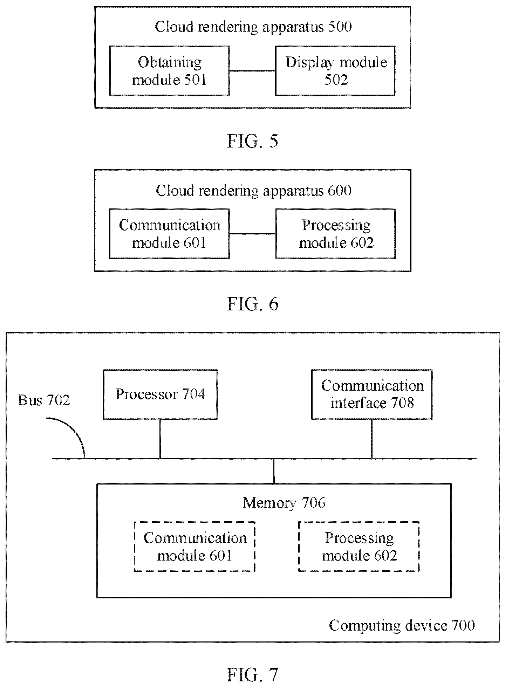

For example, FIG. 5 is a diagram of a structure of a cloud rendering apparatus according to an embodiment of this application. The cloud rendering apparatus may be deployed on a cloud rendering application client. As shown in FIG. 5, a cloud rendering apparatus 500 may include an obtaining module 501 and a display module 502. The obtaining module 501 is configured to obtain a rendering instruction delivered by a user of the cloud rendering application client, and send a first message to a cloud rendering node. The first message includes a rendering task, the first message indicates the cloud rendering node to execute the rendering task by using a cloud rendering application and at least one postprocessing program, and the postprocessing program may be used to provide an image processing capability that cannot be provided by the cloud rendering application. The obtaining module 501 is further configured to obtain a second message sent by the cloud rendering node, where the second message includes a rendered image obtained by the cloud rendering node by executing the rendering task. The display module 502 is configured to display the rendered image in response to the second message.

In some embodiments, the rendering instruction delivered by the user includes the at least one postprocessing program selected by the user on the cloud rendering application client.

In some embodiments, when there are a plurality of postprocessing programs, the rendering instruction delivered by the user further includes a use sequence of the plurality of postprocessing programs that is set by the user.

In some embodiments, before the obtaining module obtains the rendering instruction delivered by the user of the cloud rendering application client, the display module is further configured to: display, by the cloud rendering application client, basic information of the postprocessing program, where the basic information includes at least one of use effect, configuration requirement, application scope, and use price.

In some embodiments, the postprocessing program is a program preselected by an administrator of the cloud rendering application.

In some embodiments, the postprocessing program is uploaded by a provider of the postprocessing program to a cloud storage node allocated by a cloud rendering management platform. The cloud rendering management platform is at least configured to configure program information of the postprocessing program, and notify the cloud rendering node to obtain the postprocessing program from the cloud storage node. The program information includes at least one of application scope, charging manner, and version information.

In some embodiments, the program information may be configured by the provider of the postprocessing program on a display interface provided by the cloud rendering management platform.

In some embodiments, the rendered image is obtained by the cloud rendering node by first executing the rendering task by using the cloud rendering application, and then processing, by using the postprocessing program, an execution result output by the cloud rendering application.

It should be understood that the foregoing apparatus is configured to perform the method performed by the cloud rendering client in the foregoing embodiment. An implementation principle and technical effect of a corresponding program module in the apparatus are similar to those described in the foregoing method. For a working process of the apparatus, refer to a corresponding process in the foregoing method. Details are not described herein again.

For example, FIG. 6 is a diagram of a structure of another cloud rendering apparatus according to an embodiment of this application. The cloud rendering apparatus may be deployed on a cloud rendering node. As shown in FIG. 6, the cloud rendering apparatus 600 may include a communication module 601 and a processing module 602. The communication module 601 is configured to obtain a first message sent by a cloud rendering application client, where the first message includes a rendering task. The processing module 602 is configured to execute, in response to the first message, the rendering task by using a cloud rendering application, to obtain a first rendered image. The processing module 602 is further configured to process the first rendered image by using at least one postprocessing program, to obtain a second rendered image. The postprocessing program may be used to provide an image processing capability that cannot be provided by the cloud rendering application. The communication module 601 is further configured to send a second message to the cloud rendering application client, where the second message includes the second rendered image.

In some embodiments, before the processing module 602 processes the first rendered image by using the at least one postprocessing program, the communication module 601 is further configured to: obtain a third message sent by a cloud rendering management platform, and the third message includes an identifier of the at least one postprocessing program; and obtain the at least one postprocessing program from a cloud storage node in response to the third message.

In some embodiments, when processing the first rendered image by using the at least one postprocessing program, the processing module 602 is specifically configured to: when there are a plurality of postprocessing programs, process the first rendered image in sequence based on a use sequence of the plurality of postprocessing programs, where the use sequence of the plurality of postprocessing programs is set by an administrator of the cloud rendering application or a user of the cloud rendering application client.

In some embodiments, the at least one postprocessing program is a program selected by the user of the cloud rendering application client on the cloud rendering application client, or the at least one postprocessing program is a program preselected by the administrator of the cloud rendering application.

It should be understood that the foregoing apparatus is configured to perform the method performed by the cloud rendering node in the foregoing embodiment. An implementation principle and technical effect of a corresponding program module in the apparatus are similar to those described in the foregoing method. For a working process of the apparatus, refer to a corresponding process in the foregoing method. Details are not described herein again.

In some embodiments, the obtaining module 501 and the display module 502 in the cloud rendering apparatus 500 described in FIG. 5, and the communication module 601 and the processing module 602 in the cloud rendering apparatus 600 described in FIG. 6 may be implemented by using software or hardware. For example, the following uses the communication module 601 as an example to describe an implementation of the communication module 601. Similarly, for an implementation of the processing module 602, refer to the implementation of the communication module 601. In addition, for implementations of the obtaining module 501 and the display module 502 in the cloud rendering apparatus 500 described in FIG. 5, refer to the implementation of the communication module 601.

The module is used as an example of a software functional unit, and the communication module 601 may include code run on a computing instance. The computing instance may include at least one of a physical host (a computing device), a virtual machine, and a container. Further, there may be one or more computing instances. For example, the communication module 601 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the communication module 601 may include at least one computing device, for example, a server. Alternatively, the communication module 601 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

The plurality of computing devices included in the communication module 601 may be distributed in a same region, or may be distributed in different regions. The plurality of computing devices included in the communication module 601 may be distributed in a same AZ, or may be distributed in different AZs. Similarly, the plurality of computing devices included in the communication module 601 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the communication module 601 may be configured to perform any step in the method performed by the cloud rendering node described above, the communication module 601 may be configured to perform any step performed by the cloud rendering node in the method provided in the foregoing embodiment, and the processing module 402 may be configured to perform any step performed by the cloud rendering node in the method provided in the foregoing embodiment. Alternatively, steps implemented by the communication module 601 and the processing module 602 may be specified as required, and the communication module 601 and the processing module 602 separately implement different steps performed by the cloud rendering node in the method provided in the foregoing embodiment, to implement all functions of the cloud rendering apparatus 600.

This application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, the bus is represented by using only one line in FIG. 7, but this does not mean that there is only one bus or only one type of bus. The bus 702 may include a path for information transmission between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a mechanical hard disk drive (hard disk drive, HDD), or a solid-state drive (solid-state drive, SSD).

The memory 706 stores executable program code. The processor 704 executes the executable program code to separately implement functions of the communication module 601 and the processing module 602, or separately implement functions of the obtaining module 501 and the display module 502, to implement all or some steps of the method in the foregoing embodiments. In other words, the memory 706 stores instructions for performing all or some steps of the method in the foregoing embodiment.

Alternatively, the memory 706 stores executable code, and the processor 704 executes the executable code to implement the functions of the cloud rendering apparatus 500 or the cloud rendering apparatus 600, to implement all or some of the steps in the method in the foregoing embodiment. In other words, the memory 706 stores instructions for performing all or some steps of the method in the foregoing embodiment.

The communication interface 703 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

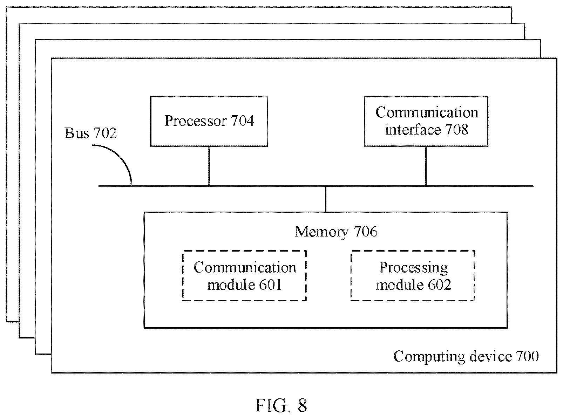

As shown in FIG. 8, the computing device cluster includes at least one computing device 700. Memories 706 in one or more computing devices 700 in the computing device cluster may store same instructions used to perform all or some of the steps of the method in the foregoing embodiment.

In some possible implementations, the memories 706 in the one or more computing devices 700 in the computing device cluster may alternatively separately store some instructions used to perform all or some of the steps of the method in the foregoing embodiment. In other words, a combination of the one or more computing devices 700 may jointly execute the instructions used to perform all or some of the steps of the method in the foregoing embodiment.

It should be noted that the memories 706 in different computing devices 700 in the computing device cluster may store different instructions, and different instructions are separately used to perform some functions of the cloud rendering apparatus 600. In other words, the instructions stored in the memories 706 in different computing devices 700 may implement functions of one or more of the communication module 601 and the processing module 602.

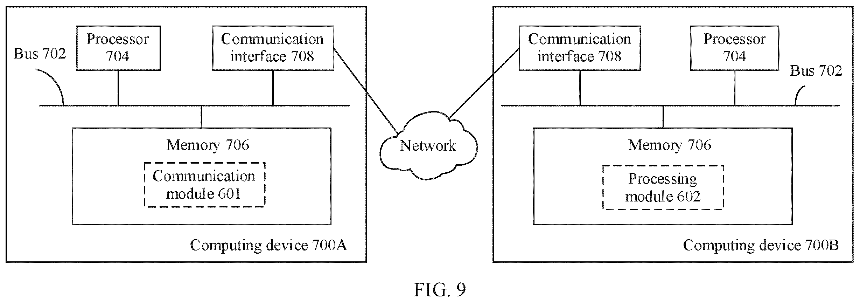

In some possible implementations, one or more computing devices in the computing device cluster may be connected via a network. The network may be a wide area network, a local area network, or the like. FIG. 9 shows a possible implementation. As shown in FIG. 9, two computing devices 700A and 700B are connected through the network. Specifically, each computing device is connected to the network through a communication interface of the computing device. In this possible implementation, a memory 706 in the computing device 700A stores instructions for executing a function of the communication module 601. In addition, a memory 706 in the computing device 700B stores instructions for executing a function of the processing module 602.

It should be understood that functions of the computing device 700A shown in FIG. 9 may alternatively be completed by a plurality of computing devices 700. Similarly, functions of the computing device 700B may alternatively be completed by a plurality of computing devices 700.

An embodiment of this application further provides another computing device cluster. For a connection relationship between computing devices in the computing device cluster, similarly refer to the connection manner of the computing device cluster in FIG. 8 and FIG. 9. A difference is that memories 706 in one or more computing devices 700 in the computing device cluster may store same instructions used to perform the method in the foregoing embodiment.

Alternatively, in some possible implementations, the memories 706 in the one or more computing devices 700 in the computing device cluster may separately store some instructions used to perform the cloud rendering method. In other words, a combination of the one or more computing devices 700 may jointly execute the instructions used to perform the cloud rendering method.

Based on the method in the foregoing embodiment, an embodiment of this application provides a computer-readable storage medium, including computer program instructions. When the computer program instructions are executed by a computing device, the computing device performs the method in the foregoing embodiment; or when the computer program instructions are executed by a computing device cluster, the computing device cluster performs the method performed by the cloud rendering node in the foregoing embodiment. For example, the computer-readable storage medium may be any usable medium that can be stored in a computing device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

Based on the method in the foregoing embodiment, an embodiment of this application provides a computer program product including instructions. When the instructions are run by a computing device, the computing device is enabled to perform the method in the foregoing embodiment, or when the instructions are run by a computing device cluster, the computing device cluster is enabled to perform the method performed by the cloud rendering node in the foregoing embodiment.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by software, hardware, firmware, or any combination thereof. When software is used to implement the embodiments, all or some of embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A cloud rendering method, comprising:
obtaining, by a cloud rendering application client, a rendering instruction delivered by a user of the cloud rendering application client;
sending, by the cloud rendering application client, a first message to a cloud rendering node in response to the rendering instruction, wherein the first message comprises a rendering task, the first message indicates the cloud rendering node to execute the rendering task by using a cloud rendering application and at least one postprocessing program, and the postprocessing program is used to provide an image processing capability that cannot be provided by the cloud rendering application;
obtaining, by the cloud rendering application client, a second message sent by the cloud rendering node, wherein the second message comprises a rendered image obtained by the cloud rendering node by executing the rendering task; and
displaying, by the cloud rendering application client, the rendered image in response to the second message.

2. The method according to claim 1, wherein the rendering instruction comprises the at least one postprocessing program selected by the user on the cloud rendering application client.

3. The method according to claim 1 or 2, wherein when there are a plurality of postprocessing programs, the rendering instruction further comprises a use sequence of the plurality of postprocessing programs that is set by the user.

4. The method according to any one of claims 1 to 3, wherein before the obtaining, by the cloud rendering application client, the rendering instruction delivered by the user of the cloud rendering application client, the method further comprises:
displaying, by the cloud rendering application client, basic information of the postprocessing program, wherein the basic information comprises at least one of use effect, configuration requirement, application scope, or use price.

5. The method according to claim 1, wherein the postprocessing program is a program preselected by an administrator of the cloud rendering application.

6. The method according to any one of claims 1 to 5, wherein the postprocessing program is uploaded by a provider of the postprocessing program to a cloud storage node allocated by a cloud rendering management platform, and the cloud rendering management platform is at least configured to: configure program information of the postprocessing program, and notify the cloud rendering node to obtain the postprocessing program from the cloud storage node, wherein the program information comprises at least one of application scope, charging manner, and version information.

7. The method according to claim 6, wherein the program information is configured by the provider of the postprocessing program on a display interface provided by the cloud rendering management platform.

8. The method according to any one of claims 1 to 7, wherein the rendered image is obtained by the cloud rendering node by first executing the rendering task by using the cloud rendering application, and then processing, by using the postprocessing program, an execution result output by the cloud rendering application.

9. A cloud rendering apparatus, deployed on a cloud rendering application client, and comprising:
an obtaining module, configured to obtain a rendering instruction delivered by a user of the cloud rendering application client, wherein
the obtaining module is further configured to send a first message to a cloud rendering node in response to the rendering instruction, wherein the first message comprises a rendering task, the first message indicates the cloud rendering node to execute the rendering task by using a cloud rendering application and at least one postprocessing program, and the postprocessing program is used to provide an image processing capability that cannot be provided by the cloud rendering application; and
the obtaining module is further configured to obtain a second message sent by the cloud rendering node, wherein the first message comprises a rendered image obtained by the cloud rendering node by executing the rendering task; and
a display module, configured to display the rendered image in response to the second message.

10. The apparatus according to claim 9, wherein the rendering instruction comprises the at least one postprocessing program selected by the user on the cloud rendering application client.

11. The apparatus according to claim 9 or 10, wherein when there are a plurality of postprocessing programs, the rendering instruction further comprises a use sequence of the plurality of postprocessing programs that is set by the user.

12. The apparatus according to any one of claims 9 to 11, wherein before the obtaining module obtains the rendering instruction delivered by the user of the cloud rendering application client, the display module is further configured to:
display basic information of the postprocessing program, wherein the basic information comprises at least one of use effect, configuration requirement, application scope, and use price.

13. The apparatus according to claim 9, wherein the postprocessing program is a program preselected by an administrator of the cloud rendering application.

14. The apparatus according to any one of claims 9 to 13, wherein the postprocessing program is uploaded by a provider of the postprocessing program to a cloud storage node allocated by a cloud rendering management platform, and the cloud rendering management platform is at least configured to: configure program information of the postprocessing program, and notify the cloud rendering node to obtain the postprocessing program from the cloud storage node, wherein the program information comprises at least one of application scope, charging manner, and version information.

15. The apparatus according to claim 13, wherein the program information is configured by the provider of the postprocessing program on a display interface provided by the cloud rendering management platform.

16. The apparatus according to any one of claims 9 to 15, wherein the rendered image is obtained by the cloud rendering node by first executing the rendering task by using the cloud rendering application, and then processing, by using the postprocessing program, an execution result output by the cloud rendering application.

17. A computing device cluster, comprising at least one computing device, wherein each computing device comprises a processor and a memory; and
the processor in the at least one computing device is configured to execute instructions stored in the memory in the at least one computing device, to enable the computing device cluster to perform the method according to any one of claims 1 to 8.

18. A computer-readable storage medium, comprising computer program instructions, wherein when the computer program instructions are executed by a computing device, the computing device performs the method according to any one of claims 1 to 8; or
when the computer program instructions are executed by a computing device cluster, the computing device cluster performs the method according to any one of claims 1 to 8.

19. A computer program product comprising instructions, wherein when the instructions are run by a computing device, the computing device is enabled to perform the method according to any one of claims 1 to 8, or when the instructions are run by a computing device cluster, the computing device cluster is enabled to perform the method according to any one of claims 1 to 8.
